(19) Europäisches Patentamt

European Patent Office

Office européen des brevets

(11) Veröffentlichungsnummer: **0 263 778 B1**

(12) **EUROPÄISCHE PATENTSCHRIFT**

(45) Veröffentlichungstag der Patentschrift: 03.04.91

(51) Int. Cl.5: **B60C 27/06**, B60C 27/10

(21) Anmeldenummer: 87730120.0

(22) Anmeldetag: 07.10.87

(54) **Reifenkette.**

(30) Priorität: 10.10.86 CH 4053/86

(43) Veröffentlichungstag der Anmeldung:
13.04.88 Patentblatt 88/15

(45) Bekanntmachung des Hinweises auf die
Patenterteilung:
03.04.91 Patentblatt 91/14

(84) Benannte Vertragsstaaten:
AT CH DE IT LI

(56) Entgegenhaltungen:
AT-B- 312 444
CH-A- 541 447
DE-U- 8 429 352
DE-U- 8 536 092

(73) Patentinhaber: **RUD-Kettenfabrik Rieger &
Dietz GmbH u. Co.**
**Friedensinsel**
**W-7080 Aalen 1(DE)**

(72) Erfinder: **Holzwarth, Dietmar, Dipl.-Ing.**
**Vogelhofstrasse 51**
**W-7070 Schwäbisch Gmünd(DE)**

(74) Vertreter: **Böning, Manfred, Dr. Ing. et al
Patentanwälte Dipl.-Ing. Dieter Jander Dr.
Ing. Manfred Böning Leistikowstrasse 2
W-1000 Berlin 19(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Reifenkette

Die Erfindung betrifft eine Reinfenkette, insbesondere Gleitschutzkette, mit einer inneren und einer äußeren Halterung für ein durch einen Spannstrang spannbares Laufnetz, bei der die äußere Halterung von einer Seitenkette gebildet wird, mit der das Laufnetz mittels Kettensträngen verbunden ist, die an Anschlußglieder der Seitenkette angreifen, die in der Betriebsstellung parallel zur Reifenflanke orientiert sind, und bei der der Spannstrang durch das Verwahren erleichternde, mit in der Betriebsstellung senkrecht zur Reifenflanke orientierten Gliedern der Seitenkette drehfest und unlösbar verbundene, ebenfalls senkrecht zur Reifenflanke orientierte Führungsösen fädelbar ist.

Durch DE-U-84 29352 ist eine Reifenkette der vorstehenden Art bekannt, bei der die Führungsösen von einem mehrfach gewundenen Draht gebildet werden, dessen Enden das die Führungsöse tragende Glied nach Art eines an einer Stelle offenen Ovals umschließen. Die bekannte Reifenkette vermag insofern nicht voll zu befriedigen, als der Aufwand zur Herstellung ihrer Führungsösen vergleichsweise groß ist. Als nachteilig erweist sich zudem der Umstand, daß die Breite der Führungsösen zumindest im Bereich der mehrfach gebogenen Drahtenden unabhängig von den Abmessungen der Glieder der Spannkette stets größer sein muß als die äußere Breite der sie tragenden Kettenglieder der Seitenkette.

Der Erfindung liegt die Aufgabe zugrunde, eine Reifenkette der in Betracht gezogenen Art zu schaffen, deren Führungsösen bei einfachem Aufbau schnell und einfach montierbar sind. Diese Aufgabe wird erfindungsgemäß durch die Merkmale des Anspruchs 1 gelöst.

Die erfindungsgemäße Reifenkette bietet den Vorteil, daß weder die Herstellung noch die Anbringung ihrer Führungsösen umfangreiche biegevorgänge erfordert und bei entsprechender Breite der Metallstreifen gute Führungseigenschaften für die Spannkette gewährleistet sind.

Als besonders vorteilhaft erweist es sich, wenn zur Bildung der Führungsösen offene Ringe mit parallel zueinander verlaufenden Enden verwendet werden, die im wesentlichen senkrecht zur Längsebene eines ovalen Hauptteiles des Ringes stehen, wobei die Ringe im Zuge der Montage der Führungsösen in Richtung der Längsachse des Ovales zusammengedrückt werden, nachdem ihre Enden in das Innere des der jeweiligen Führungsöse zugeordneten Gliedes der Seitenkette gesteckt wurden. Es kommt dabei zu einer im wesentlichen V-förmigen Ausbildung der Enden der die Führungsösen bildenden Metallstreifen und zu deren Verankerung zwischen den Schenkeln des entsprechenden Gliedes der Seitenkette. Die Führungsöse kann in diesem Fall zumindest ebenso schmal ausgebildet sein wie das Kettenglied, an dem sie befestigt ist.

Die Erfindung wird im folgenden anhand der beigefügten Zeichnung näher erläutert. Es zeigen:

Fig. 1    die Außenansicht einer auf einen Reifen montierten Gleitschutzkette,

Fig. 2    eine bei II in Fig. 1 dargestellte Einzelheit der Gleitschutzkette gemäß Fig. 1,

Fig. 3    einen Schnitt längs der Linie III-III in Fig. 2,

Fig. 4    einen Schnitt längs der Linie IV-IV in Fig. 3 und

Fig. 5    eine der Fig. 3 entsprechende Ansicht einer Führungsöse vor der endgültigen Anbringung an der Seitenkette.

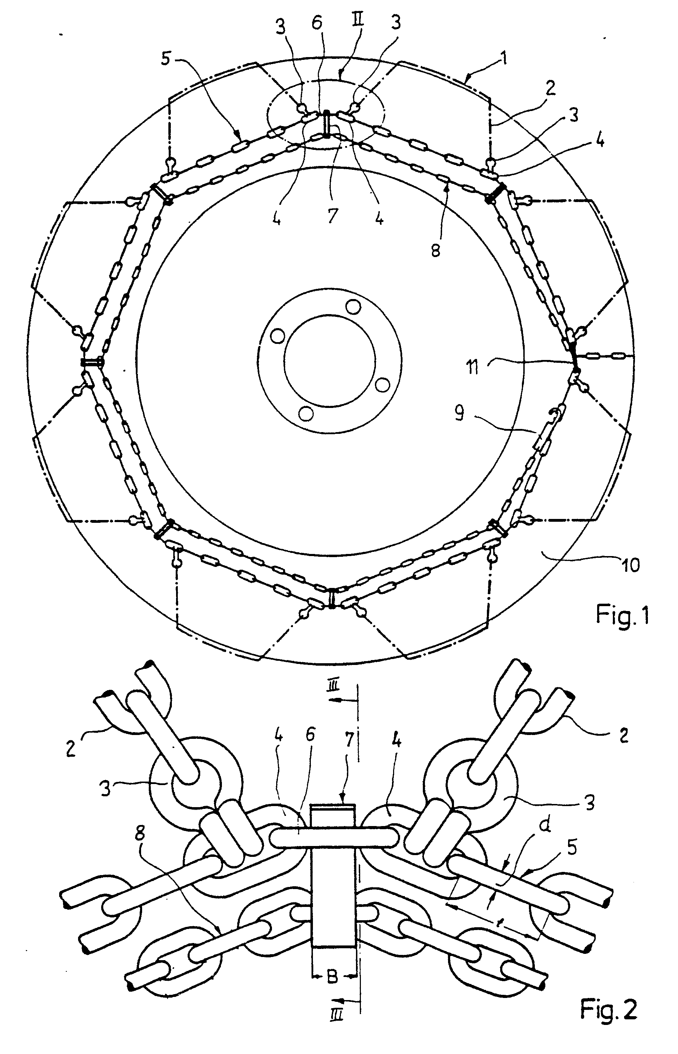

In Fig. 1 ist mit 1 allgemein das Laufnetz einer Gleitschutzkette bezeichnet, welche Kettenstränge 2 aufweist, die über sogenannte Seitenhaken 3 mit Anschlußgliedern 4 einer von einer Seitenkette 5 gebildeten äußeren Halterung verbunden sind. Zwischen jeweils zwei Anschlußgliedern 4 für Seitenhaken 3 greift an ein Glied 6 der Seitenkette 5 eine Führungsöse 7 für einen Spannstrang 8 an, der an seinem Ende einen Verwahrungshaken 9 aufweist. Der Spannstrang 8 verbindet die Enden der nicht dargestellten inneren Halterung miteinander und läuft über die Lauffläche des Reifens 10 zu dessen Vorderseite. Dort passiert er ein Verriegelungsorgan 11, das vorzugsweise von einer Scheibe mit einer schlüssellochförmigen Aussparung gebildet wird, in die jeweils ein Glied des als Kette ausgebildeten Spannstranges 8 einhängbar ist, und das gleichzeitig ein Sperrelement für den Verwahrungshaken 9 bildet.

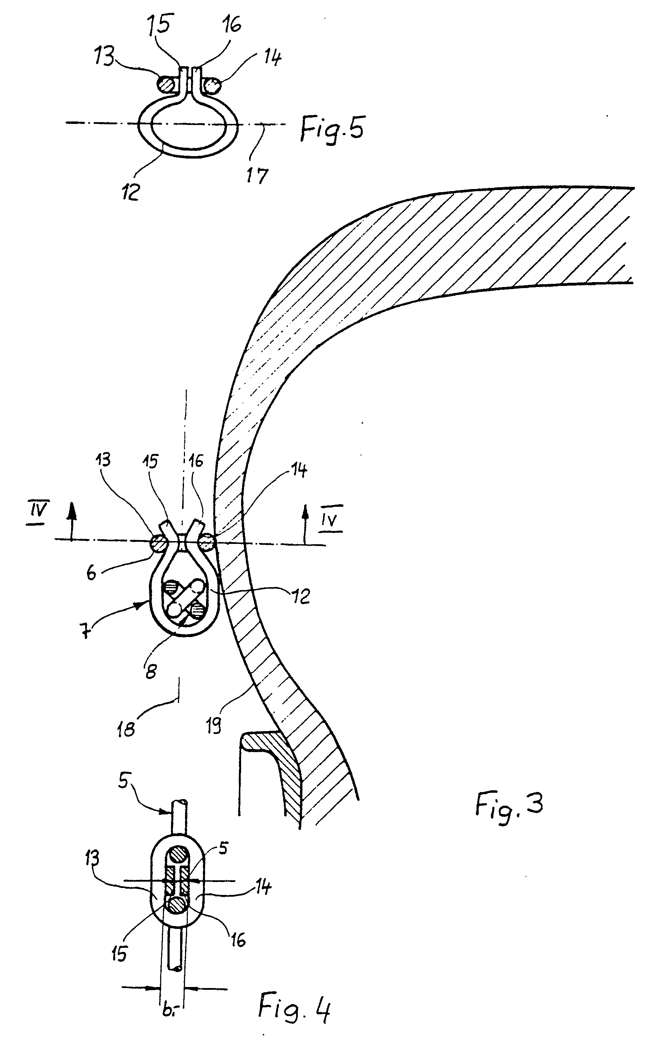

Einzelheiten der verwendeten Führungsösen 7 ergeben sich aus den Fig. 2 - 5. Man erkennt, daß die Führungsösen 7 von einem offenen Ring gebildet werden, der einen Hauptteil 12 und zwei zwischen die Längsschenkel 13,14 eines Gliedes 6 der Seitenkette greifende Enden 15,16 aufweist. Die Enden 15,16 bilden eine im wesentlichen V-förmige Verankerung der Führungsöse am Glied 6. Diese Verankerung läßt sich leicht herstellen, indem man von einem Metallstreifen ausgeht, der die in Fig. 5 dargestellte Ausgangsform hat, d.h. dessen Enden 15,16 im wesentlichen senkrecht zur Längsachse 17 eines ovalen Hauptteiles 12 stehen. Bei der Montage werden die parallelen Enden 16 und 17 zwischen die Längsschenkel 13 und 14 eingeführt, und anschließend wird der hauptteil 12 in Richtung der Längsachse 17 zusammengedrückt und die Führungsöse derart deformiert, daß sie die in Fig. 3 dargestellte Form annimmt. Der Einsatz besonderer Aufspreizwerkzeuge für die Enden 15,16 der Führungsöse 7 erübrigt sich mithin. Im fertigen Zustand bildet die Führungsöse 7 wiederum ein Oval, dessen Längsachse 18 aber nunmehr parallel zur Reifenflanke 19 verläuft, wobei es zweckmäßig sein kann, wenn die parallel zur Reifenflanke 19 orientierten Längsschenkel der Führungsöse 7 leicht konkav ausgebildet sind, um eine gute Anlage zwischen Führungsöse 7 und Reifenflanke 19 zu erreichen.

Die Breite B der Führungsösen 7 ist annähernd gleich der Differenz aus der Teilung t und der doppelten Dicke 2nd der ihnen zugeordneten Glieder 6 der Seitenkette 5, während die Stärke s der die Führungsösen 7 bildenden Metallstreifen annähernd gleich der halben inneren Breite $b_i$ der ihnen zugeordneten Glieder 6 der Seitenkette 5 sein sollte.

## Ansprüche

1. Reifenkette, insbesondere Gleitschutzkette, mit einer inneren und einer äußeren Halterung für ein durch einen Spannstrang spannbares Laufnetz (1), bei der die äußere Halterung von einer Seitenkette (5) gebildet wird, mit der das Laufnetz (1) mittels Kettensträngen (2) verbunden ist, die an Anschlußglieder (4) der Seitenkette (5) angreifen, die in der Betriebsstellung parallel zur Reifenflanke (19) orientiert sind, und bei der der Spannstrang (8) durch das Verwahren erleichternde, mit in der Betriebsstellung senkrecht zur Reifenflanke (19) orientierten Gliedern (6) der Seitenkette (5) drehfest und unlösbar verbundene, ebenfalls senkrecht zur Reifenflanke (19) orientierte Führungsösen (7) fädelbar ist, dadurch gekennzeichnet, daß die Führungsösen (7) aus Metallstreifen gebogen sind, die offene Ringe bilden, deren Enden (15,16) Halteanker formen, die die Längsschenkel (13,14) der ihnen zugeordneten Glieder (6) der Seitenkette (5) durch plastische Verformung von innen zumindest partiell umgreifen.

2. Reifenkette nach Anspruch 1, dadurch gekennzeichnet, daß die Enden (15,16) der Metallstreifen im wesentlichen V-förmig ausgebildet sind.

3. Reifenkette nach einem der Ansprüche 1 bis 2, dadurch gekennzeichnet, daß die Metallstreifen eine Breite B haben, die annähernd gleich der Differenz aus der Teilung t und der doppelten Dicke 2d der ihnen zugeordneten Glieder (6) der Seitenkette (5) ist.

4. Reifenkette nach einem der Ansprüche 1 bis 3, dadurch gekennzeichnet, daß die Metallstreifen eine Stärke s haben, die annähernd gleich der halben inneren Breite $b_i$ der ihnen zugeordneten Glieder (6) der Seitenkette (5) ist.

5. Reifenkette nach einem der Ansprüche 1 bis 4, dadurch gekennzeichnet, daß die Führungsöse (7) ein Oval bildet, dessen Längsachse (18) im wesentlichen parallel zur Reifenflanke verläuft.

6. Reifenkette nach Anspruch 5, dadurch gekennzeichnet, daß die Führungsöse (7) leicht konkav ausgebildete, parallel zur Reifenflanke (19) orientierte Längsschenkel aufweist.

7. Verfahren zur Herstellung einer Reifenkette nach einem der Ansprüche 1 bis 6, dadurch gekennzeichnet, daß zwei parallel zueinander verlaufende Enden (15,16) der Führungsöse (7) Zwischen die Lüngsschenkel (13,14) des jeweiligen Gliedes (6) eingefürt werden ünd anschließend der Haüptteil (12) das die Fürunsöse (7) bildenden offenen Ringes derart deformiert wird, daß die Enden (15,16) eine V-förmige Form einnehmen.

## Claims

1. Tyre chain, particularly a non-slip chain, having an inner and an outer retaining means for a running mesh (1) which can be tensioned by a tensioning strand, the outer retaining means being formed by a side chain (5) to which the running mesh (1) is connected by means of chain strands (2) which engage in connecting links (4) of the side chain (5) which are oriented parallel to the tyre wall (19) in the operating position, and in which the tensioning strand (8) can be threaded through guide eyelets (7) which facilitate retention, are unreleasably connected in a manner locked against rotation with links (6) of the side chain (5) which are perpendicular to the tyre wall (19) in the operating position, and are likewise oriented perpendicularly to the tyre wall (19), characterised in that the guide eyelets (7) are bent from metal strips which form open rings, whose ends (15, 16) constitute retaining anchors which at least partially encompass the long sides (13, 14) of the members (6) of the side chain (5) assigned thereto by plastic deformation from inside.

2. Tyre chain according to Claim 1, characterised in that the ends (15, 16) of the metal strips are of substantially V-shaped design.

3. Tyre chain according to one of Claims 1 to 2, characterised in that the metal strips have a width B which is approximately equal to the difference between the clearance t and double the thickness 2d of the links (6) of the side chain (5) assigned thereto.

4. Tyre chain according to one of Claims 1 to 3, characterised in that the metal strips have a thickness s which is approximately equal to half the inner width $b_1$ of the links (6) of the side chain (5) assigned thereto.

5. Tyre chain according to one of Claims 1 to 4, characterised in that the guide eyelet (7) forms an oval whose longitudinal axis (18) extends substantially parallel to the tyre wall.

6. Tyre chain according to Claim 5, characterised in that the guide eyelet (7) possesses long sides of slightly concave design oriented parallel to the tyre wall (19).

7. Method of manufacturing a tyre chain according to one of Claims 1 to 6, characterised in that two ends (15, 16) of the guide eyelet (7), extending parallel to one another, are introduced between the long sides (13, 14) of the particular link (6) and the main part (12) of the open ring forming the guide eyelet (7) is then deformed in a manner such that the ends (15, 16) adopt a V-shaped form.

**Revendications**

1. Chaîne pour pneumatique, en particulier chaîne antidérapante, comportant une attache intérieure et une attache extérieure destinées à un réseau de roulement (1) qui peut être tendu au moyen d'un tronçon de tension, dans laquelle l'attache extérieure est constituée d'une chaîne latérale (5) à laquelle le réseau de roulement (1) est relié au moyen de tronçons de chaîne (2) qui s'accrochent sur des maillons de raccordement (4) de la chaîne latérale (5) qui, en position d'utilisation, sont orientés parallèlement au flanc (19) du pneumatique, et dans laquelle le tronçon de tension (8) peut être enfilé au moyen d'oeillets de guidage (7) qui facilitent le stockage, qui sont reliés sans possibilité de rotation et de manière indétachable à des maillons (6) de la chaîne latérale orientés, en position d'utilisation, perpendiculairement au flanc (19) du pneumatique et qui sont également orientés perpendiculairement au flanc (19) du pneumatique, caractérisée en ce que les oeillets de guidage (7) sont obtenus par pliage de bandes de métal qui forment des anneaux ouverts dont les extrémités (15,16) constituent des pièces de maintien qui s'accrochent au moins partiellement de l'intérieur dans les branches longitudinales (13,14) des maillons (6) de la chaîne latérale (5) qui leur sont adjoints.

2. Chaîne pour pneumatique selon la revendication 1, caractérisée en ce que les extrémités (15,16) des bandes de métal sont essentiellement en forme de V.

3. Chaîne pour pneumatique selon l'une des revendications 1 à 2, caractérisée en ce que les bandes de métal présentent une largeur B qui est approximativement égale à la différence entre le pas t et le double de l'épaisseur 2d des maillons (6) de la chaîne latérale (5) qui lui sont adjoints.

4. Chaîne pour pneumatique selon l'une des revendications 1 à 3, caractérisée en ce que les bandes métalliques présentent une épaisseur s qui est approximativement égale à la moitié de la largeur intérieure $b_i$ des maillons (6) de la chaîne latérale (5) qui lui sont adjoints.

5. Chaîne pour pneumatique selon l'une des revendications 1 à 4, caractérisée en ce que l'oeillet de guidage (7) a la forme d'un ovale dont l'axe longitudinal (18) est disposé essentiellement parallèlement au flanc (19) du pneumatique.

6. Chaîne pour pneumatique selon la revendication 5, caractérisée en ce que l'oeillet de guidage (7) comporte des branches longitudinales présentant une forme légèrement concave et orientées parallèlement au flanc (19) du pneumatique.

7. Procédé pour la fabrication d'une chaîne de pneumatique selon l'une des revendications 1 à 6, caractérisé en ce que deux extrémités (15,16) s'étendant parallèlement l'une par rapport à l'autre sont introduites entre les branches longitudinales (13,14) de chaque maillon (6) et en ce qu'ensuite la partie principale (12) de l'anneau ouvert formant l'oeillet de guidage (7) est déformée de telle manière que les extrémités (15,16) prennent la forme d'un V.

Fig.1

Fig.2

Fig.5

Fig.3

Fig.4